# EUROPEAN PATENT APPLICATION

(11) **EP 4 834 722 A1**
(43) Date of publication of application: **04.11.2026**
(21) Application number: 25173802.7
(22) Date of filing: 30.04.2025
(51) Int. Cl.: B62D 25/02, B62D 25/08

(54) **REAR PART STRUCTURE FOR A VEHICLE BODY**

(71) Applicant: Volvo Car Corporation, 405 31 Göteborg (SE)
(72) Inventor: ENGLUND, Thomas, 40531 Göteborg (SE); NÄKNE, Andreas, 40531 Göteborg (SE); PETTERSSON, Lars, 40531 Göteborg (SE); AXELSSON, Erik, 40531 Göteborg (SE); CLARK, Austen, 40531 Göteborg (SE)
(74) Representative: Kransell & Wennborg KB

(57) **Abstract**

The disclosure relates to a rear part structure (10) for a vehicle body (100) of a vehicle (1), wherein the rear part structure (10) comprises two wheelhouse portions (30) for partially housing a wheel (2) therein and located opposite one another, wherein at least one of the two wheelhouse portions (30) comprises a mounting segment (31) for mounting a shock absorber (3), at least one connection interface (33, 34, 35, 36) for connection to at least one pillar structure (110, 120) of the vehicle body (100) and/or a subframe structure (150) of the vehicle body (100), and at least one load transfer member (32) extending between the mounting segment (31) and one of the at least one connection interfaces (33, 34, 35, 36).

## Description

### TECHNICAL FIELD

The present disclosure relates to a rear part structure for a vehicle body, and a vehicle body for a vehicle.

### SUMMARY

Vehicle bodies can comprise several different structures, which may be attached to one another. One of these structures is the rear part structure, which is generally located in the rear end of a vehicle. Typically, the rear part structure is being inter alia used for a trunk of the vehicle, where the rear part structure supports a luggage compartment floor inside the trunk. Luggage or other loads can be placed on the luggage compartment floor inside the trunk and is consequently supported by the rear part structure. The rear part structure however can have many more parts attached thereto, such as, for example, shock absorbers or generally a wheel suspension, batteries, and so on. The rear part structure may be attached to further structures of the vehicle body.

Generally, distributing rear chassis and crash loads in a weight efficient, sustainable and cost-efficient way obtaining excellent attribute performance is very important.

Traditionally this has been realized utilizing load paths in terms of straight stiff beams connecting the rear floor with the upper body.

However, such beam structures may not always be provided in the rear part structure. For example, in the case of a casted rear part structure, straight and closed sections to form beams are not straightforward to realize compared to other manufacturing solutions.

If beam structures extending along the rear part structure are not available or not sufficient to distribute the loads, another solution is required to optimally distribute the loads through the rear part structure.

The problem is at least partially solved or alleviated by the subject matter of the independent claims of the present disclosure, wherein further examples are incorporated in the dependent claims.

According to a first aspect, there is provided a rear part structure for a vehicle body of a vehicle. The rear part structure comprises two wheelhouse portions for partially housing a wheel therein. The two wheelhouse portions are located opposite one another. At least one of the two wheelhouse portions comprises a mounting segment for mounting a shock absorber. At least one of the two wheelhouse portions further comprises at least one connection interface for connection to at least one pillar structure of the vehicle body and/or a subframe structure of the vehicle body. At least one of the two wheelhouse portions further comprises at least one load transfer member extending, in particular longitudinally or along its length, between the mounting segment and one of the at least one connection interface.

Accordingly, the rear part structure is provided with at least one load transfer member on at least one of the two opposite wheelhouse portions. The at least one load transfer member may connect the at least one pillar structure and/or the subframe structure of the vehicle body with the mounting segment, which receives the loads from the shock absorber dampening road bumps.

Thereby, the at least one load transfer member can for example transfer these chassis loads from the shock absorber to the at least one pillar structure. Alternatively, or additionally, the at least one load transfer member may transfer loads from the subframe structure to the mounting segment and optionally from there to the at least one pillar structure. The effective load path formed by the at least one load transfer member thereby allows to transfer the chassis load inside the vehicle body to reduce vibration and noise. At the same time, the at least one load transfer member can increase the stiffness of the rear part structure for increased stability with little weight added to the at least one wheelhouse portion by the at least one load transfer member.

Specifically, the at least one load transfer member is provided as part of the at least one wheelhouse portion and does not require a closed section or beam structure or shape. Therefore, the at least one wheelhouse portion with the at least one load transfer member may be manufactured in different ways, such as but not limited to casting. Specifically, the at least one load transfer member may be casted together with the entire rear part structure.

Of course, both opposite wheelhouse portions may be configured with the mounting segment, at least one connection interface and at least one load transfer member as specified herein. Specifically, both wheelhouse portions may be designed equally, meaning that each one comprises a mounting segment for mounting a shock absorber, at least one connection interface for connection to at least one pillar structure of the vehicle body and/or a subframe structure of the vehicle body, and at least one load transfer member extending, in particular longitudinally or along its length, between the mounting segment and one of the at least one connection interface.

The wheelhouse portions may generally comprise a convex or bulge shape, which may be extending with its convex or bulge shape towards the base portion. Also, the wheelhouse portions may generally have an at least partially round or circular circumference or perimeter. Thereby, the wheels of the vehicle can be at least partially received within a space formed by the convex or bulge shape and within the at least partially round or circular perimeter of the wheelhouse portions.

The rear part structure may generally form a rear part of the vehicle body. Specifically, a bumper may be attached to the rear part structure. The rear part structure may be part of a trunk or generally a compartment of the vehicle or, in other words, form at least partially a trunk or compartment of the vehicle, in particular a support structure for the trunk such that luggage or other loads can be supported and consequently transported in the rear of the vehicle.

In an example, at least one of the wheelhouse portions may comprise at least two load transfer members. Each one of the at least two load transfer members may be extending, in particular longitudinally or along its length, between the mounting segment and a different one of two or more connection interfaces.

In an example, the two load transfer members may be connected to one another at the mounting segment. Thereby, it is possible to continuously transfer load from one connection interface to the other. Also, it is possible to additionally transfer the load from the mounting segment via the same connected two load transfer members.

In an example, one of the two different connection interfaces may be arranged for connection to the at least one pillar structure of the vehicle body. Such connection interface may also be referred to herein as a pillar connection interface. Another one of the two different connection interfaces may be arranged for connection to the subframe structure of the vehicle body. Such connection interface may also be referred to herein as a subframe connection interface. Thereby, it is possible to transfer the load from the subframe structure entering the rear part structure via the mounting segment onwards to the at least one pillar structure. Thus, an effective and simple load path is provided for forwarding shock absorber loads and subframe loads in the vehicle body from the rear part structure into the remaining vehicle body.

In an example, the at least one of the wheelhouse portions may comprise at least three load transfer members. Each one of the at least three load transfer members may be extending, in particular longitudinally or along its length, between the mounting segment and a different one of three or more connection interfaces.

In an example, two of the different connection interfaces may be arranged for respective connection to two different pillar structures of the vehicle body. Another one of the different connection interfaces may be arranged for connection to the subframe structure of the vehicle body. In other words, there may be two pillar connection interfaces for connection to different pillar structures of the vehicle body and at least one subframe connection interface for connection to the subframe structure. Thereby, loads or forces from the subframe structure and the mounting segment can be effectively transferred via the at least three load transfer members to the two pillar structures.

In an example, at least one of the wheelhouse portions may comprise four load transfer members. Each one of the load transfer members may be extending, in particular longitudinally, between the mounting segment and a different one of four connection interfaces. Also, there may be more than four load transfer members.

In an example, two of the different connection interfaces may be arranged for respective connection to two different pillar structures of the vehicle body. Another two of the different connection interfaces may be arranged for respective connection to the subframe structure of the vehicle body. In other words, there may be two pillar connection interfaces for connection to different pillar structures of the vehicle body and two subframe connection interfaces for connection to the subframe structure. Thereby, loads or forces from the subframe structure and the mounting segment can be effectively transferred via the at least three load transfer members to the two pillar structures.

In an example, the four load transfer members may together form a substantial X-shape and/or H-shape. Substantial herein means that the four load transfer members approximately form an X- and/or H-shape. The mounting segment for mounting the shock absorber may be located substantially in a center or middle of the X- and/or H-shape. Thereby, a load transfer structure in an X- and/or H-shape is provided by the four load transfer members. Advantageously, this allows the load transfer structure to transfer loads from the subframe structure at two different locations of the wheelhouse portions via the mounting segment, where further loads from the shock absorber may be taken up, to the pillar structures.

In an example, the rear part structure comprises two pairs of load transfer members, each pair comprising two connected load transfer members extending, in particular longitudinally or along its length, between a connection interface arranged for connection to a pillar structure and a connection interface arranged for connection to the subframe structure. Specifically, each pair of load transfer members extends between different connection interfaces. In other words, each two load transfer members form a pair. Accordingly, there are two pairs of load transfer members. The two load transfer members of each pair are connected to one another and extend from a pillar connection interface to a subframe connection interface. Each pair of load transfer members extends between a different pillar connection interface and a different subframe connection interface compared to the other pair.

In an example, the two pillar structures may be a D-pillar structure and a C-pillar structure. Any one of the pillar structures may be having a pillar shape and may be optionally extending as a pillar ring around the vehicle body.

In an example, the at least one load transfer member may be configured as a rib. The rib may be extending in length between the mounting segment and the respective connection interface. The rib may be extending in width and height transverse to its length. In addition to the load transferring capabilities, the rib provides for a stiffer wheelhouse portion of the rear part structure.

In an example, the rear part structure may be a monolithically casted structure or, in other words, casting. All portions, segments and members of the rear part structure may be integrally designed with one another, meaning that all these portions and members are part of the one-piece or monolithic structure of the rear part structure. The rear part structure may be made from one single material, specifically a metal, e.g., aluminum or an aluminum alloy. Such aluminum casting may be made entirely from aluminum or can comprise aluminum, e.g., predominantly aluminum, and other materials, specifically metals. In particular, the rear part structure may be advantageously casted from metal, specifically as a single part in the form of a mega casting. For example, for the mega casting, a High-Pressure Die Casting (HDPC) process may be used, where the molten metal, such as but not limited to aluminum, is pushed into a die or, in other words, mold. This die consists of die tools that are pressed together and sealed just before the molten metal is pushed in. After the metal is pushed in, the tools are retracted, and the die opens again, and the casted metal rear part structure can be removed from the open die.

In an example, the rear part structure may comprise a base portion extending longitudinally between the two wheelhouse portions. The rear part structure may further comprise side member portions extending longitudinally transverse to the longitudinal extension of the base portion. A floor support structure can be supported in between the wheelhouse portions and/or on the base portion. The floor support structure may be configured to support the luggage compartment floor thereon. At least one or two side member portions, e.g. in the form of side rails, may be extensions of each wheelhouse portions or arranged adjacent thereto. Specifically, the at least one or both side member portion may extend from or at each one of the wheelhouse portions and in parallel to one another. The side member portions may be used for transferring loads along a rear floor in a vehicle's longitudinal extension. As an example, during a rear crash, the forces that are exerted on the vehicle may travel from a bumper, which may be attached by one or more rear extruded parts to the rear part structure, along the side members and continue forwards in the vehicle.

According to a second aspect, there is provided a vehicle body for a vehicle comprising the rear part structure of the first aspect of this disclosure. The at least one connection interface is connected to the at least one pillar structure of the vehicle body and/or the subframe structure of the vehicle body.

In particular, the vehicle body may be comprising the subframe structure and two pillar structures, specifically a C-pillar structure and a D-pillar structure. Four connection interfaces of each wheelhouse portion of the rear part structure may be respectively connected to one of the two pillar structures and the subframe structure.

The subframe structure may be configured for attachment to one or more wheel suspension links, such as one or more control arms, for example. Alternatively, the subframe structure may therefore also be referred to herein as a vehicle suspension structure. Also, or as example of a wheel suspension link, the shock absorber may be attached or connected to the subframe structure. The subframe structure may for example be in the form of a frame, in particular of a substantially rectangularly shaped frame.

According to a further aspect, there may be provided a vehicle comprising the vehicle body of the second aspect.

The vehicle may further comprise wheels partially housed inside the wheelhouse portions of the rear part structure. Further, the vehicle may have shock absorbers mounted to or at the mounting segment of each wheelhouse portion. Also, the vehicle may comprise a wheel suspension with two or more wheel suspension links. Each one of these at least two wheel suspension links may be attached or connected to the subframe structure and a respective one of the wheels.

For example, the vehicle may be a car or automobile. Specifically, the vehicle may be a passenger car. For example, the vehicle may be an electric vehicle. As electric vehicle, the battery inside the vehicle may be a traction battery. Further, the electric vehicle may comprise an electric propulsion system, which includes the battery, and an electric motor coupled to each other. The electric vehicle may for example be a battery electric vehicle, a hybrid electric vehicle, or a fuel cell vehicle.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a side view on a vehicle;
- Figure 2: shows a partial perspective view on a part of a rear part structure used in the vehicle body of the vehicle of Fig. 1;
- Figure 3: shows a side view on a wheelhouse portion of the rear part structure of Fig. 2;
- Figure 4: shows a side view on the wheelhouse portion of the rear part structure of Fig. 3 connected to the remainder of the vehicle body;
- Figure 5: shows another side view on the wheelhouse portion of the rear part structure of Fig. 3 connected to the remainder of the vehicle body; and
- Figure 6: shows a cross section through a C-pillar structure of the vehicle body of the vehicle of Fig. 1.

### DETAILED DESCRIPTION

The Figures are merely schematic representations and serve only to illustrate examples of the disclosure. Identical or equivalent elements are in principle provided with the same reference signs.

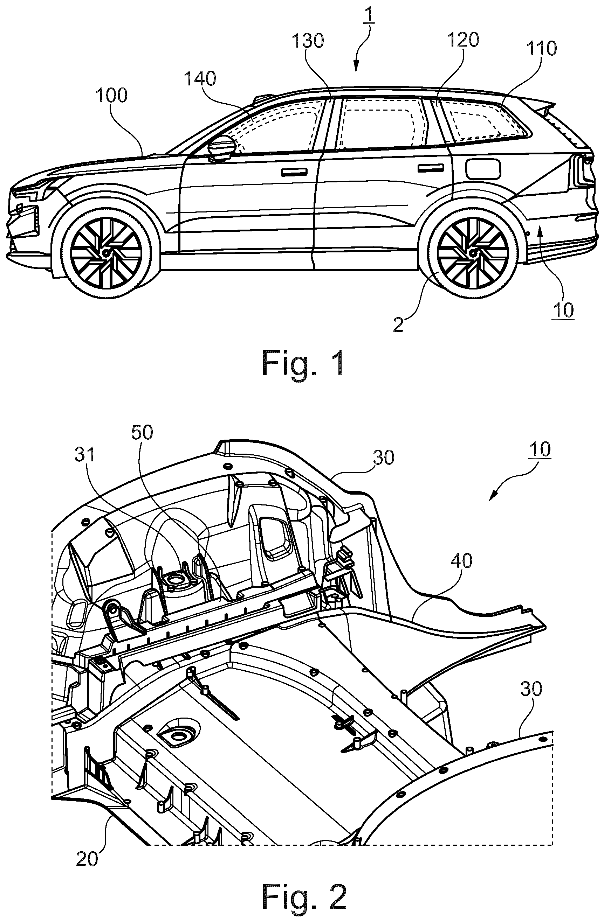

Figure 1 shows a vehicle 1 with a vehicle body 100 comprising four pillar structures 110, 120, 130, 140 in this example. In this example, the pillar structures 110, 120, 130, 140 are a D-pillar structure 110, a C-pillar structure 120, a B-pillar structure 130 and an A-pillar structure 140.

In the rear-end of the vehicle body 100, a rear part structure 10 is located. The rear part structure 10 of this example is a monolithically casted structure, e.g. from aluminum. The rear part structure 10 is hidden in Fig. 1 by the outer body panel but seen in a perspective partial view in Fig. 2.

Figure 2 shows a perspective partial view on the rear part structure 10 of the vehicle body 100 of the vehicle 1. The rear part structure 10 comprises a base portion 20 and two wheelhouse portions 30, which are located opposite one another and are arranged for partially housing the wheels 2 of the vehicle 1 therein. The base portion 20 extends in between the two wheelhouse portions 30.

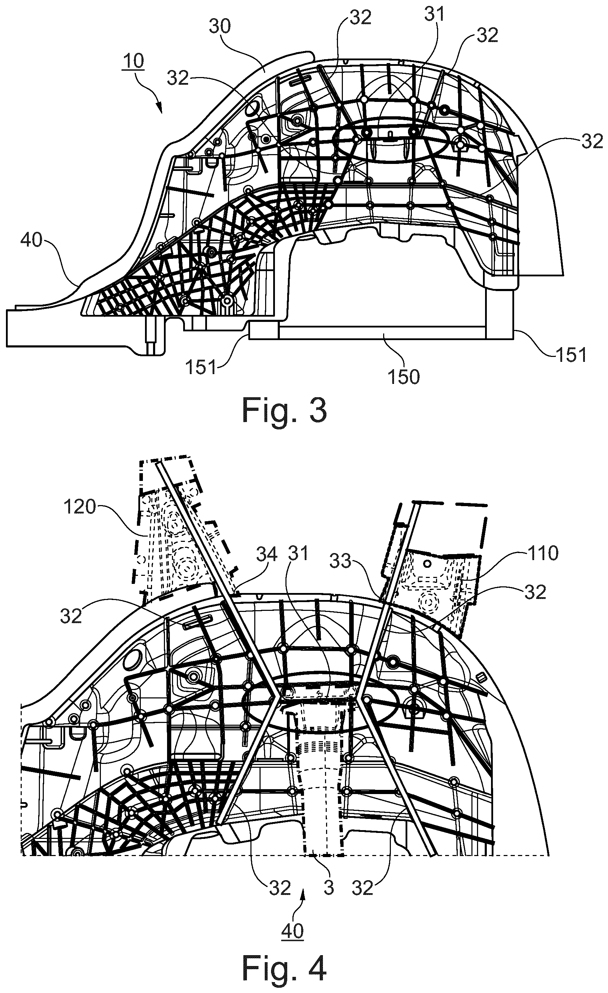

The wheelhouse portion 40 may comprise support members, which are supporting a floor support structure 50 thereon, which in turn may be used for supporting a luggage compartment floor thereon (not shown). Further, the wheelhouse portions 30 may comprise shock absorber segments or mounting segments 31 for receiving or mounting a shock absorber 3 (see Fig. 4) thereat.

The rear part structure 10 further comprises side members 40 extending in length with or in parallel to the wheelhouse portions 30 and/or with the base portion 20 towards the front of the vehicle 10 comprising the vehicle body 100 with the rear part structure 10 and any further structures 110, 120, 130, 140, 150, 160 forming the overall vehicle body 100.

The overall cross-section of the side member portions 40 may be rectangular or square. Specifically, the side member portions 40 may be configured as beams or rails. These beams or rails may extend inside the rear part structure 10 for connection to vehicle body structures closer to the front of the vehicle body 100.

Figure 3 shows a side perspective view onto the exterior or outer side of one of the two wheelhouse portions 30. Both wheelhouse portions 30 may be equally designed.

The wheelhouse portions 30 generally comprise a convex or bulge shape, which may be extending with its convex or bulge shape towards the base portion 20. Also, the wheelhouse portions 30 may generally have an at least partially round or circular circumference or perimeter. Thereby, the wheels 2 of the vehicle 1 can be at least partially received within the space formed by the convex or bulge shape and within the at least partially round or circular perimeter of the wheelhouse portions 30.

The wheelhouse portions 30 may be attached to a subframe structure 150, which can be configured to connect or attach to, or be connected or attached to wheel suspension links such as control arms (not shown), for example. These wheel suspension links may be connected to the wheels 2. As seen in Fig. 3 schematically, the subframe structure 150 is attached in the example of Fig. 3 via attachment elements 151 to the rear part structure 10, which for example be rubber or elastomer bushings.

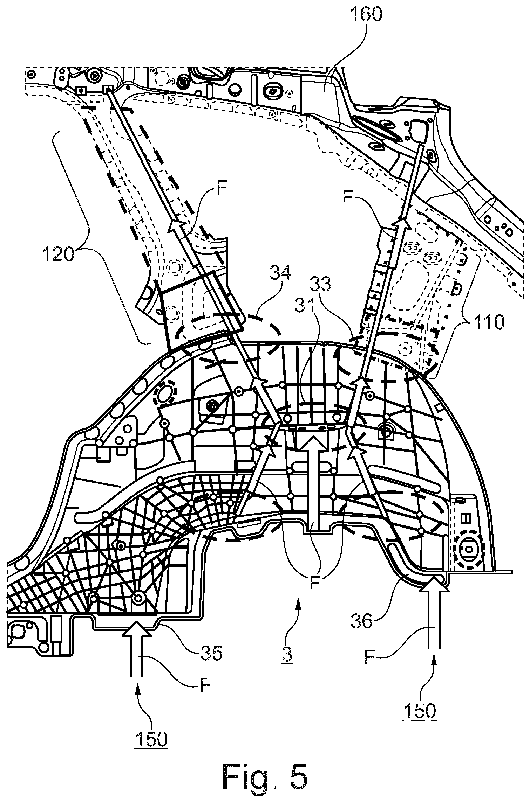

On the other hand, as seen in Figures 4 and 5, the rear part structure 10 may be configured via its wheelhouse portions 30 to the D-pillar structure 110 and the C-pillar structure 120 of the vehicle body 100 opposite of its connection to the subframe structure 150.

Specifically, in this example, the wheelhouse portion 30 comprises four connection interfaces 33, 34, 35, 36.

The first connection interface 33 may be referred to herein also as a D-pillar connection interface 33. The first connection interface 33 is located at an upper periphery or rim of the wheelhouse portion 30. The D-pillar structure 110 is connected to the wheelhouse portion 30 at the first connection interface 33.

The second connection interface 34 may be referred to herein also as a C-pillar connection interface 34. The second connection interface 34 is located at an upper periphery or rim of the wheelhouse portion 30. The second connection interface 34 is located at a distant from the D-pillar connection interface 33. The C-pillar structure 120 is connected to the wheelhouse portion 30 at the second connection interface 34.

The third and fourth connection interfaces 35, 36 may be referred to herein also as subframe connection interfaces 35, 36. They are located at lower periphery or side, in particular an underside or bottom side of the wheelhouse portion 30. Specifically, the subframe connection interfaces 35, 36 are located opposite pillar connection interfaces 33, 34, specifically at opposite heights of the wheelhouse portion 30. The third and fourth connection interfaces 35, 36 are located at a distance from one another. Specifically, the third and fourth connection interfaces 35, 36. The subframe structure 150 is connected to the wheelhouse portions 30 at the connection interfaces 35, 36 as seen in Fig. 3.

As seen in Figs. 4 and 5, load transfer members 32 extend between the mounting segment 31 where the shock absorber 3 is mounted and the respective interfaces 33, 34, 35, 36. The mounting segment 31 is exemplary configured or provided as a top mount herein. Specifically, the load transfer members 32 extend in length from the mounting segment 31 towards each one of the respective connection interfaces 33, 34, 35, 36, wherein exemplary four load transfer members 32 are provided. Further, in this example, in their extension in length or longitudinally, the load transfer members 32 are straight or, in other words, extend along a straight path.

In this example, the load transfer members 32 are configured as continuous ribs. These ribs connect the mounting segment 31 with each one of the interfaces 33, 34, 35, 36 and thereby with the pillar structures 110, 120 and the subframe structure 150.

Specifically, the load transfer members 32 extending on each of two opposite sides of the mounting segment 31 form a pair of load transfer members 32 that are connected to one another such that it forms a continuous load transfer member 32. These pairs of load transfer members 32 connect one of the pillar connection interface 33, 34 with an opposite subframe connection interface 35, 36.

As seen in Fig. 4 and 5, the pairs of load transfer members 32 may be extending in length at an angle relative to one another and/or meet at an angle relative to one another. Thereby, a substantially X- and/or H-shaped configuration of the four load transfer members 32 is formed with the mounting segment 31 and the shock absorber 3 in between.

Moreover, as seen in Fig. 5, the upper load transfer members 32 connect the respective pillar structures 110, 120 with the mounting segment 31 in this example. On the other hand, the lower load transfer members 32 extend from the mounting segment 31 towards the subframe structure 150 but not all the way to the respective subframe connection interfaces 35, 36. Rather, in this example, the lower load transfer members 32 extend until a lower rim or edge of the wheelhouse portion 30. From there, there are further straight load carrying structure such as ribs and similar, through which the load transfer members 32 connect to the subframe connection interfaces 35, 36.

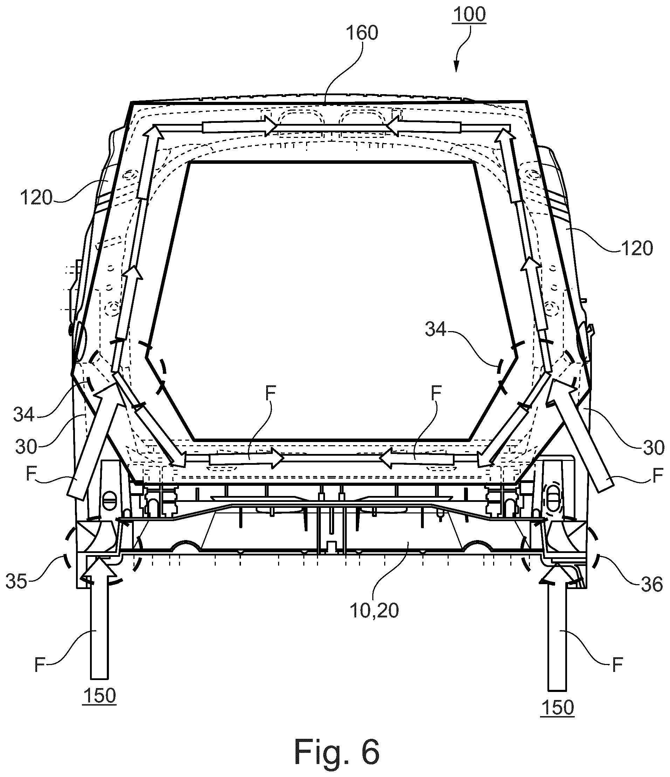

As further seen in Fig. 5 and Figure 6 illustrating a cross-sectional view through the vehicle body 100 at the location of the C-pillar structure 120, thereby, the load transfer members 32 can transfer load or force F coming from the subframe structure 150 via the lower two load transfer members 32 beneath the mounting segment 31 to the mounting segment 31 and from there, potentially with load or force F from the shock absorber 3, via the upper load transfer members 32 above the mounting segment 31 to the C-pillar structure 120 and the D-pillar structure 110, and up to the roof structure 160 connected to both pillar structures 110, 120.

Specifically, the pillar structures 110, 120, themselves may be comprising load transfer structures, such as ribs or beams, which may be connected at the respective connection interfaces 33, 34 to the load transfer members 32, thereby further transferring the loads or forces F across the vehicle body 100.

The effective load path formed by the load transfer members 32 thereby allows to transfer the chassis load coming from the shock absorbers 3 and the wheel suspension attached to the subframe structure 150 into the vehicle body 100 to reduce vibration and noise. At the same time, the load transfer members 32 can increase the stiffness of the rear part structure 10 for increased stability with little weight added to the wheelhouse portions 30 by the load transfer members 32.

Specifically, the chassis loads may be mainly entering the casted rear part structure 10 via the mounting segment 31 and the subframe attachment elements 151. By casting the load transfer elements 32 and thereby as ribs in an X-shape with the top mount attachment of the mounting segment 31 in the middle, an optimal stiff and weight efficient load path is created. The X-shape load path in the rear part structure 10 becomes integrated part of the C- and D-pillars or rings as well as support for the top mount. This results in excellent structural efficiency and noise, vibration, harshness performance.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 10: rear part structure
- 20: side member portion
- 21: first segment
- 22: first ribs
- 22a: circumferential ribs
- 22b: radial ribs
- 22c: ends of the first ribs
- 23: spring seat plane
- 24: second segment
- 25: second ribs
- 26: side member walls
- 26a: top side member wall
- 26b: bottom side member wall
- 26c: lateral side member wall
- 30: base portion
- 40: wheelhouse portion
- 50: coil spring unit
- 51: spring seat
- 52: coil spring
- 60: floor support structure
- 100: vehicle
- L: longitudinal axis, length
- H: height axis, height
- W: width axis, width

## Claims

1. A rear part structure (10) for a vehicle body (100) of a vehicle (1), wherein the rear part structure (10) comprises two wheelhouse portions (30) for partially housing a wheel (2) therein and located opposite one another, wherein at least one of the two wheelhouse portions (30) comprises a mounting segment (31) for mounting a shock absorber (3), at least one connection interface (33, 34, 35, 36) for connection to at least one pillar structure (110, 120) of the vehicle body (100) and/or a subframe structure (150) of the vehicle body (100), and at least one load transfer member (32) extending between the mounting segment (31) and one of the at least one connection interface (33, 34, 35, 36).

2. The rear part structure (10) of claim 1, wherein the at least one of the wheelhouse portions (30) comprises at least two load transfer members (32), each one extending between the mounting segment (31) and a different one of two or more connection interfaces (33, 34, 35, 36).

3. The rear part structure (10) of claim 2, wherein the two load transfer members (32) are connected to one another at the mounting segment (31).

4. The rear part structure (10) of claim 2 or 3, wherein one of the two different connection interfaces (33, 34) is arranged for connection to the at least one pillar structure (110, 120) of the vehicle body (100) and another one of the two different connection interfaces (35, 36) is arranged for connection to the subframe structure (150) of the vehicle body (100).

5. The rear part structure (10) of any one of the previous claims, wherein the at least one of the wheelhouse portions (30) comprises at least three load transfer members (32), each one extending between the mounting segment (31) and a different one of three or more connection interfaces (33, 34, 35, 36).

6. The rear part structure (10) of claim 5, wherein two of the different connection interfaces (33, 34) are arranged for respective connection to two different pillar structures (110, 120) of the vehicle body (100) and another one of the different connection interfaces (35, 36) is arranged for connection to the subframe structure (150) of the vehicle body (100).

7. The rear part structure (10) of any one of the previous claims, wherein the at least one of the wheelhouse portions (30) comprises four load transfer members (32), each one extending between the mounting segment (31) and a different one of four connection interfaces (33, 34, 35, 36).

8. The rear part structure (10) of claim 7, wherein two of the different connection interfaces (33, 34) are arranged for respective connection to two different pillar structures (110, 120) of the vehicle body (100) and another two of the different connection interfaces (35, 36) are arranged for respective connection to the subframe structure (150) of the vehicle body (100).

9. The rear part structure (10) of claim 7 or 8, wherein the four load transfer members (31) together form a substantial X-shape and/or H-shape.

10. The rear part structure (10) of any one of claims 8 to 9, wherein the rear part structure (10) comprises two pairs of load transfer members (32), each pair comprising two connected load transfer members (32) extending between a connection interface (33, 34) arranged for connection to a pillar structure (110, 120) and a connection interface (35, 36) arranged for connection to the subframe structure (150).

11. The rear part structure (10) of any one of claims 8 to 10, wherein the two pillar structures (110, 120) are a D-pillar structure (110) and a C-pillar structure (120).

12. The rear part structure (10) of any one of the previous claims, wherein the at least one load transfer member (32) is configured as a rib.

13. The rear part structure (10) of any one of the previous claims, wherein the rear part structure (10) is a monolithically casted structure.

14. The rear part structure (10) of any one of the previous claims, wherein the rear part structure (10) comprises a base portion (20) extending longitudinally between the two wheelhouse portions (30), and wherein the rear part structure (10) comprises side member portions (40) extending longitudinally transverse to the longitudinal extension of the base portion (20).

15. A vehicle body (100) for a vehicle (1), the vehicle body (100) comprising the rear part structure (10) of any one of the previous claims, wherein the at least one connection interface (33, 34, 35, 36) is connected to the at least one pillar structure (110, 120) of the vehicle body (100) and/or the subframe structure (150) of the vehicle body (100).
